(19) **Europäisches Patentamt**
**European Patent Office**
**Office européen des brevets**

(11) **EP 2 677 337 B1**

(12) **EUROPEAN PATENT SPECIFICATION**

(45) Date of publication and mention
of the grant of the patent:
**21.01.2015 Bulletin 2015/04**

(51) Int Cl.:
***G01S 5/02*** *(2010.01)*     *G06F 17/30* *(2006.01)*

(21) Application number: **13172152.4**

(22) Date of filing: **14.06.2013**

(54) **Method and apparatus for providing semantic location in electronic device**

Verfahren und Vorrichtung zur Bereitstellung einer semantischen Position in einer elektronischen Vorrichtung

Procédé et appareil pour fournir un emplacement sémantique dans un dispositif électronique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2012 KR 20120065418**

(43) Date of publication of application:
**25.12.2013 Bulletin 2013/52**

(73) Proprietor: **Samsung Electronics Co., Ltd Gyeonggi-do 443-742 (KR)**

(72) Inventors:
• **Song, Moon-Bae**
**Seoul (KR)**
• **Roh, Dong-Hyun**
**Gyeonggi-do (KR)**
• **Min, Kyung-Sub**
**Gyeonggi-do (KR)**

(74) Representative: **Nederlandsch Octrooibureau P.O. Box 29720 2502 LS The Hague (NL)**

(56) References cited:
**KR-A- 20120 041 972     US-A1- 2009 310 585**

**Description**

**BACKGROUND OF THE INVENTION**

1. Field of the Invention:

The present invention generally relates to an electronic device. More particularly, the present invention relates to a method and apparatus for recognizing a semantic location of the electronic device.

2. Description of the Related Art:

With advances in mobile communication technologies, techniques of calculating a location of a mobile terminal in a communication network and contents for providing various services using user location information are under developments.

In case of a conventional technique, a location recognition method using a wireless network may use a Wireless Fidelity (Wi-Fi) Access Point (AP), a base station, or a cell tower. When using the base station, a Time-Of-Arrival (TOA) scheme, an Angle-Of-Arrival (AOA) scheme, and a Time-of-Difference-Of-Arrival (TDOA) scheme may be used. When the location recognition method uses the WiFi AP, a Received Signal Strength Indictor (RSSI) is used.

However, in the conventional technique, location information is only objective information such as a home address or coordinate information (e.g., a latitude, a longitude, an altitude, etc.), and a location meaningful to a user or a personalized location (e.g., location information that can vary depending on the user such as 'home', 'office', 'car', etc.) is not provided.

Therefore, a need exists for a method and apparatus for recognizing a semantic location and for providing a more personalized service by using the semantic location.

The above information is presented as background information only to assist with an understanding of the present disclosure. No determination has been made, and no assertion is made, as to whether any of the above might be applicable as prior art with regard to the present invention.

KR20120041972 discloses an AP(Access Point) location estimation method, an apparatus for the same, and a terminal thereof, which are provided to store location information of an AP after estimating location information of the AP through log data of a subscriber. The method further disclosing; An AP identification confirming unit confirms information which is not matched with pre-stored information of a database as second AP identification information. A location determining unit determines location information of a specific terminal based on a longitude coordinate value obtained by first AP identification information. A location estimation unit distinguishes the second AP identification information as new log data. The location estimation unit recognizes the location information as location estimation information.

US2009310585 discloses The disclosed a method and system for increasing the accuracy of a WLAN based position estimate using cellular positioning information. In some embodiments, the method can include determining a set of possible WLAN location solutions for a WLAN and cellular enabled device based on one or more WLAN access points, obtaining cellular measurements from at least one cell tower, and determining the best WLAN location solution from the set of possible WLAN location solutions using the cellular measurements. In one embodiment, the method can include using the cellular measurements from the at least one cell tower to provide a cellular based location estimate for the WLAN and cellular enabled device.

**SUMMARY OF THE INVENTION**

Aspects of the present invention are to address at least the above-mentioned problems and/or disadvantages and to provide at least the advantages described below. Accordingly, an aspect of the present invention is to provide a method and apparatus for recognizing a semantic location of an electronic device.

Another aspect of the present invention is to provide a method and apparatus for providing a location-aware application using a semantic location.

In accordance with an aspect of the present invention, a location recognition method as defined in claim 1 is provided.,According to the iventionhe instruction for determining the location search target in the DB including the location information on the basis of the first network information is configured such that a place of which the first network information in the DB including the location information is "null" is included in the location search targets, a place corresponding to third network information acquired through a network is included in the location search targets, the place of which the first network information is "null" is a place of which a location is not fixed, and the first network information or the third network information includes at least one of a cell IDentifier (ID), a Location Area Code (LAC), a Mobile Network Code (MNC), and a Mobile Country Code (MCC).

In an exemplary embodiment of the present invention, the second network information includes a device ID acquired based on at least one near field communication protocol and signal strength information corresponding to the device.

In an exemplary embodiment of the present invention, the programs further includes an instruction for excluding a place belonging to the determined location search targets and not including the second network information from the location search target.

In an exemplary embodiment of the present invention, the instruction for measuring the relative distance by using the first signal strength and the second signal strength with respect to the selected at least one place is configured such that the relative distance is measured by using a difference between signal strength of first devices found at the current location and signal strength of second devices pre-stored in the DB, and signal strength of devices belonging to the found first device and not coinciding with the pre-stored second devices is "0".

In an exemplary embodiment of the present invention, the instruction for recognizing the selected at least one place as the current location on the basis of the relative distance comprises an instruction for: reporting that at least one of the selected place is the current location if the relative distance is less than a first threshold; and inquiring whether the selected at least one place is configured to the current location when the relative distance is between the first threshold and a second threshold.

In an exemplary embodiment of the present invention, the instruction for measuring the relative distance by using the first signal strength and the second signal strength with respect to the selected at least one place comprises an instruction for: if the number of devices found from the second devices pre-stored in the DB is greater than or equal to a ratio of the maximum number of devices required for place recognition, setting the relative distance to "0"; if the number of devices found from the second devices pre-stored in the DB is greater than or equal to a ratio of the minimum number of devices required for place recognition, setting the relative distance to a pre-set maximum distance; and otherwise, measuring the relative distance by using a difference between signal strength of the first devices found at the current location and signal strength of the second devices pre-stored in the DB.

In an exemplary embodiment of the present invention, the programs further includes, when the selected at least one place is recognized as the current location, an instruction for updating network information on the place pre-stored in the DB, by using the second network information.

In an exemplary embodiment of the present invention, the instruction for updating the network information on the place pre-stored in the DB by using the second network information comprises an instruction for: with respect to the selected at least one place, determining signal strength of the found first devices and devices coinciding with the pre-stored second devices to an average value of signal strength of the first device and signal strength of the second device; deleting unfound devices belonging to the second devices by using a timestamp of currently not found devices; deleting devices not included in the second devices if signal strength of a fourth device belonging to the found first devices and not included in the second devices is less than a threshold; selecting a specific number of fifth devices from third devices belonging to the first devices and not included in the second and fourth devices belonging to the second devices and not included in the first devices; and storing the first devices, devices coinciding with the second devices, and the fifth devices by sorting the devices in a timestamp order.

In an exemplary embodiment of the present invention, the programs further includes an instruction for generating location information in the DB, the instruction for generating the location information in the DB comprises an instruction for: determining at least one of a place category, a place label, whether an input place is fixed or movable, and a time range to which the input place will be applied; acquiring the first network information if the input place is fixed; setting the first network information to "null" if the input place is not fixed; acquiring the second network information; and generating one piece of location information by combining the place category, the place label, whether the input place is fixed or movable, the time range to which the input place will be applied, the first network information, and the second network information.

Other aspects, advantages, and salient features of the invention will become apparent to those skilled in the art from the following detailed description, which, taken in conjunction with the annexed drawings, discloses exemplary embodiments of the invention.

## BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 illustrates a scenario for providing semantic location information according to an exemplary embodiment of the present invention;

FIG. 2 illustrates an electronic device according to an exemplary embodiment of the present invention;

FIG. 3 illustrates a flowchart for adding semantic place information according to an exemplary embodiment of the present invention;

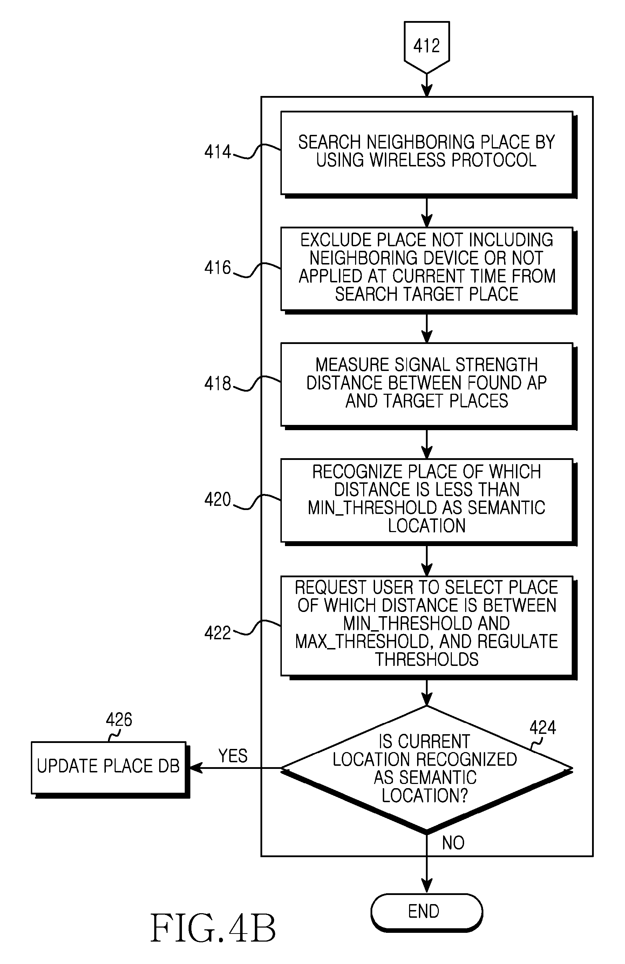

FIG. A and FIG. 4B illustrate a flowchart for recognizing a semantic place in an electronic device according to an exemplary embodiment of the present invention;

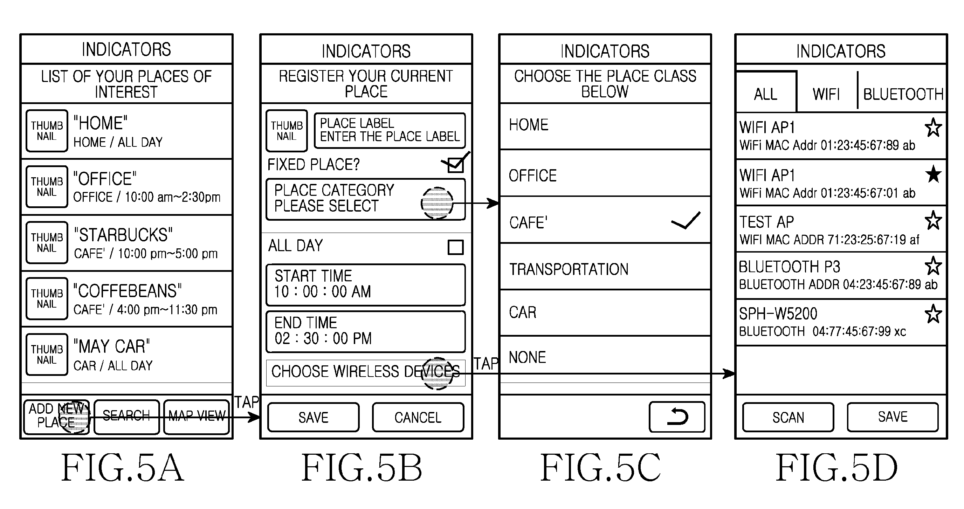

FIG. 5A to FIG. 5D illustrate a user interface for inputting a semantic place according to an exemplary embodiment of the present invention;

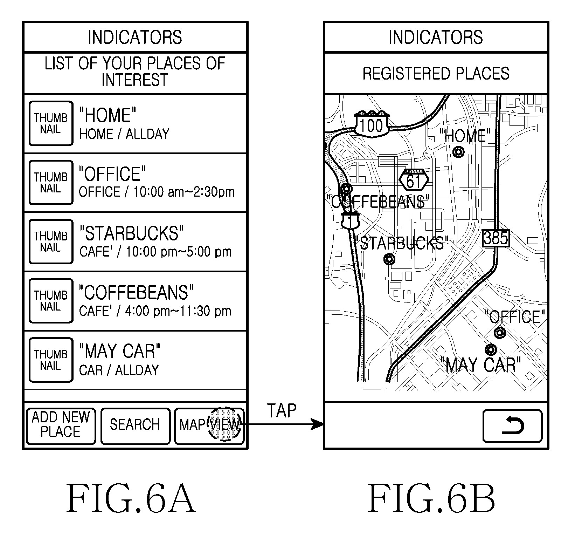

FIG. 6A and FIG. 6B illustrate an example of indicating a semantic place in a map according to an exemplary embodiment of the present invention;

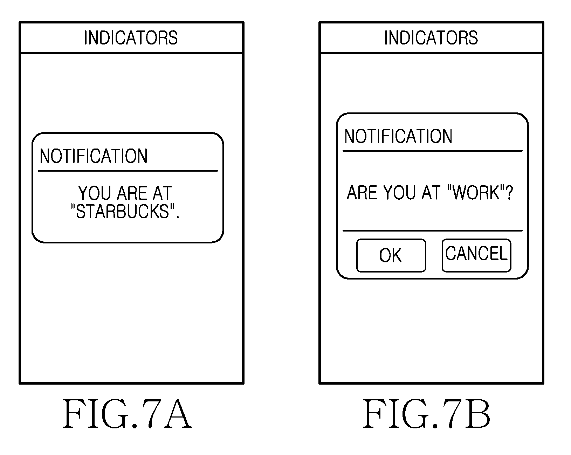

FIG. 7A and FIG. 7B illustrate a user interface for semantic location recognition according to an exemplary embodiment of the present invention; and

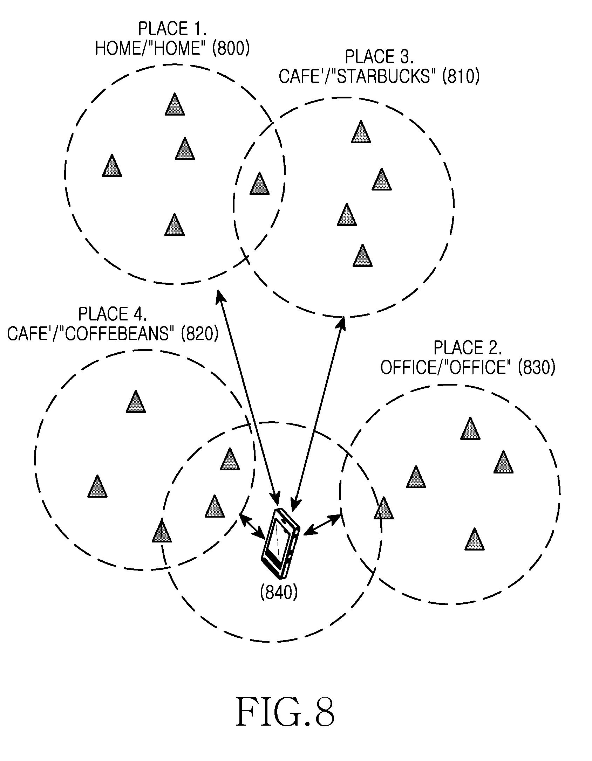

FIG. 8 illustrates the concept of determining a semantic place according to an exemplary embodiment of the present invention.

Throughout the drawings, it should be noted that like reference numbers are used to depict the same or similar elements, features, and structures.

## DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Hereinafter, an exemplary method and apparatus for recognizing a semantic location of an electronic device will be described.

The present invention relates to semantic location recognition by using a wireless network. In the following description, the term "semantic location" denotes subjective and personalized location information from the perspective of a user, rather than objective information such as a home address or coordinate information (e.g., a latitude, a longitude, an altitude, etc.). The semantic location information may relate to a fixed place such as an individual's house, a close friend's house, an office, etc., or may relate to a movable object such as a bus or car frequently in use.

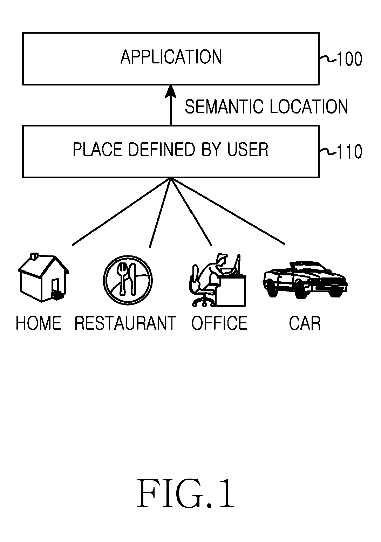

FIG. 1 illustrates a scenario for providing semantic location information according to an exemplary embodiment of the present invention.

Referring to FIG. 1, an application 100 provides a location-aware service to a user by using information on a user-defined place 110. The information on the user-defined place 110 is stored and managed in a place DataBase (DB) on the basis of information related to a network. Further, when a place which satisfies a requirement is selected among several places in the place DB, selected semantic location information (e.g., a home, a restaurant, an office, a car, etc.) is provided to the application in an event-driven manner.

Network information is generated by combining network information using various protocols such as a cellular network, a Wireless Local Area Network (WLAN), a BlueTooth, a Transmission Control Protocol/Internet Protocol (TCP/IP), etc. For example, the cellular network information may include a cell IDentifier (ID), a Location Area Code (LAC), a Mobile Network Code (MNC), and a Mobile Country Code (MCC) (see Table 1 below). The WLAN information may be information obtained by using passive/active scanning for a neighboring Access Point (AP). Bluetooth network information may be information obtained by using a search function for a Bluetooth device. The network information using the TPC/IP protocol may be an IP address or the like.

Table 1

| Cell Global Identity (CGI) | | | |
|---|---|---|---|
| Cell ID | LAC | MMC | MCC |
| Up to 5 digits | Up to 5 digits | 2-3 digits | 3 digits |

Herein, a Location Area Identification (LAI) including the MCC, the MNC, and the LAC is obtained when registering a location of a terminal. The LAC is a 2-octet code for identifying a location area in the same Public Land Mobile Network (PLMN), and is unique in the same PLMN. A Location Area (LA) is a paging unit of the terminal, and is a group of cells. The MCC is a country code, and the MNC is a network code. The cell ID is obtained when the terminal enters or re-enters a network.

The place DB is a storage for a location that is of interest to the user (hereinafter, referred to as semantic location). Each semantic location is associated with network information such as a place ID, a place category, and a place label. Further, a time range to which each semantic place will be applied (that is, a time at which the user acts in a corresponding semantic location) can additionally include a start time/end time. Furthermore, information on the semantic location may further include information (hereinafter, a near field network information) obtained from a WiFi AP, a Bluetooth, an IP network, etc., in addition to the cellular network information. The following description is based on the WiFi AP. Herein, the near field network information may be each AP's Media Access Control (MAC) address, Received Signal Strength Indicator (RSSI), etc.

According to exemplary implementations, the time range to which each semantic location will be applied may be additionally defined for a day of the week, a date, and a month.

In comparison with the cellular network information (e.g., MCC, MNC, LAC, etc.), the near field network information is periodically updated to maintain the latest state. By using such a periodic update, it is possible to adaptively respond to a physical situation which dynamically changes.

Herein, the place ID takes a role as a place identifier, and the place label is a series of character streams input by the user. The place category implies a category of places. For example, the place category may be "Home", "Work", "Shopping", "Car", "Cafe", etc. Table 2 shows an example of the place DB.

Table 2

| place ID | place category | place label | Cell Global Identity (CGI) | | | | Start time | End time | AP1 | AP2 | ... | APn |
|---|---|---|---|---|---|---|---|---|---|---|---|---|
| | | | Cell ID | LAC | MNC | MCC | | | | | | |
| place 1 | Home | "house" | cid1 | lac1 | mnc1 | mcc1 | | | <ap11, rssi> | | ... | |
| Place 2 | Office | "office" | cid2 | lac2 | mnc2 | mcc2 | | | <ap21, rssi> | | ... | |
| place 3 | Cafe | "star bucks" | cid3 | lac2 | mnc3 | mcc3 | | | <ap31, rssi> | | ... | |
| place 4 | Cafe | "coffee beans" | null | null | null | null | | | <ap41, rssi> | | ... | |

According to exemplary implementations, meta information such as a zip code, an area code, a building name, a floor number, etc., can be written to the place DB.

Meanwhile, a Cell Global Identify (CGI) which is cellular network information is sub-categorized into the Cell ID, the LAC, the MNC, and the MCC as shown in Table 1. If the CGI value is "null", it implies that a corresponding place (or a semantic place) is physically movable.

As shown in Table 2, the place DB is a group of areas of interest to the user, and can be expressed in a map as shown in FIG. 6B below.

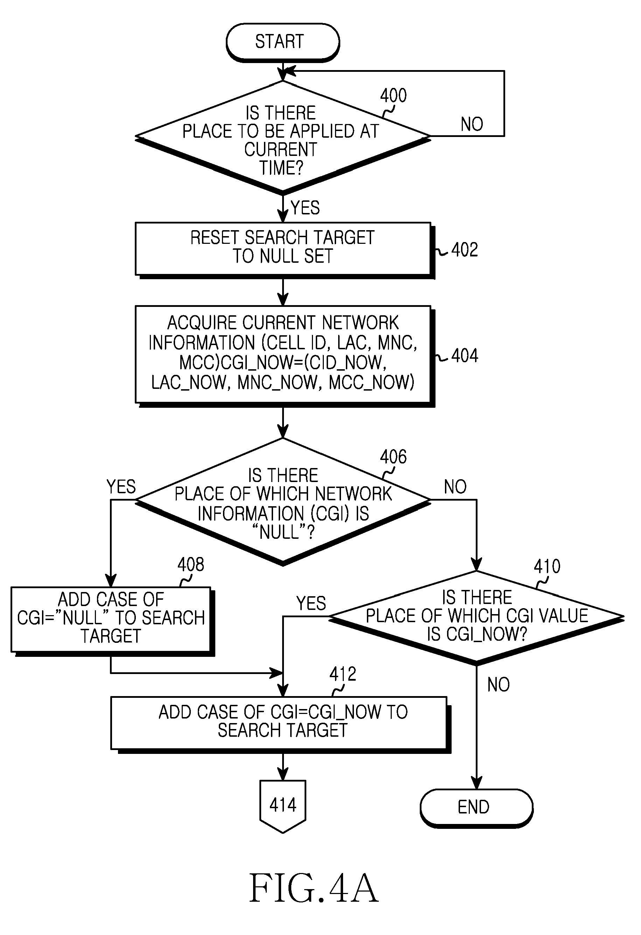

In addition, a semantic location at every time is determined while periodically or non-periodically performing the procedure of FIG. 4, and near field network information is updated to the latest information.

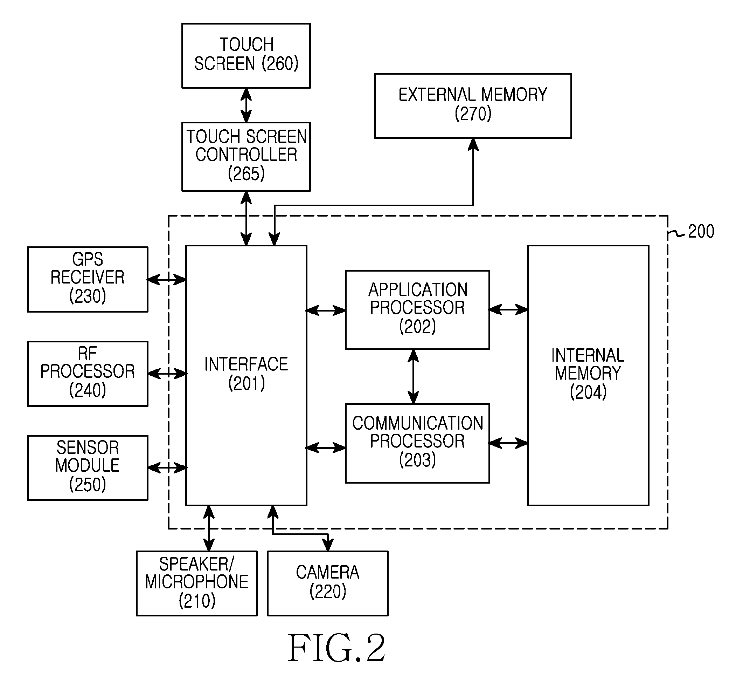

FIG. 2 illustrates an electronic device according to an exemplary embodiment of the present invention.

In the following description, the electronic device may be a portable electronic device, and may be a device such as a portable terminal, a mobile phone, a mobile pad, a media player, a tablet computer, a handheld computer, or a Personal Digital Assistant (PDA). In addition, the electronic device may be any portable electronic device including a device combining two or more functions among these devices.

Referring to FIG. 2, the electronic device includes a controller 200, a speaker/microphone 210, a camera 220, a Global Positioning System (GPS) receiver 230, a Radio Frequency (RF) processor 240, a sensor module 250, a touch screen 260, a touch screen controller 265, and an external memory 270.

The controller 200 may include an interface 201, one or more processors 202 and 203, and an internal memory 204. Optionally, the entire part of the controller 200 may be referred to as a processor. The interface 201, the application processor 202, the communication processor 203, and the internal memory 204 may be separate components or may be integrated into one or more integrated circuits.

The application processor 202 performs various functions for the electronic device by executing a variety of software programs, and the communication processor 203 processes and controls voice communication and data communication. In addition to such a typical function, the processors 202 and 203 may also execute a specific software module (i.e., an instruction set) stored in the external memory 270 or the internal memory 204 and thus perform various specific functions corresponding to the module. That is, the processors 202 and 203 perform the method of the exemplary embodiment of the present invention by interworking with software modules stored in the external memory 270 or the internal memory 204.

In the exemplary embodiment for adding semantic place information of the present invention, the application processor 202 receives from a user a place category, a place label, whether an input place is fixed or movable, and a start time/end time which is a time range to which the input place will be applied (see FIG. 5B). Further, whether the input place is fixed is determined, and current cellular network information (i.e., cell ID, LAC, MCC, and MNC) is obtained (see Table 1 above).

In addition, a neighboring AP or device is scanned by operating a near field wireless communication module (e.g., WLAN, Near Field Communication (NFC), Bluetooth, infrared communication, etc.), and is sorted in a descending order according to an RSSI (see FIG. 5C). Upper n elements are selected from the sorted list and thereafter a new place is added to a place DB by performing post-processing. For example, in the post-processing, if an RSSI value is too low or too high, it is changed to a proper value. Alternatively, a high RSSI value may be randomly set for an AP preferred by the user. For example, an RSSI value less than RSSI_Max*25% is replaced with RSSI_Max, or an RSSI value greater than RSSI-Max*90% is replaced with RSSI_Max.

In an exemplary embodiment for recognizing a semantic place of the present invention, the application processor 202 resets a search target to a null set if there is a place to be applied at a current time, acquires network information at the current time, searches whether a movable place (i.e., a place of which network information is "null") exists in the place DB, adds a case of CGI="null" to the search target if the movable place exists in the place DB, determines whether there is a place of which network information in the place data is current network information (cgi_now) if the movable place does not exist in the place DB, adds a case of CGI=cgi_now to the search target if the place of which network information is cgi_now exists in the place DB, scans neighboring APs or neighboring devices by operating a near field wireless communication module (e.g., WLAN, NFC, Bluetooth, etc.), excludes a place which does not include even one of neighboring APs or devices or which is not applied at the current time from a search target place since distance measurement is not necessary for such a place, measures a signal strength distance between neighboring APs and remaining target places, and recognizes a place as a semantic location (see FIG. 7A) if a measured relative distance is less than min_threshold. Further, the application processor 202 delivers a determined semantic location to an application and a module in a system, reports the determined semantic location through a user interface, requests the user to determine a semantic location (see FIG. 7B) and regulates a threshold if the measured distance is between min_threshold and max_threshold.

In addition, various functions of the electronic device described above and to be described below can be performed by using one or more stream processors and/or a hardware component including an Application Specific Integrated Circuit (ASIC) and/or a software component and/or a combination thereof.

Another processor (not shown) may include one or more data processors, an image processor, or a codec. The data processor, the image processor, or the codec can be configured separately. In addition, these elements can be configured as several processors each of which performs a different function. The interface 201 is connected to the touch screen controller 265 of the electronic device and the external memory 270.

The sensor module 250 coupled to the interface 201 can enable various functions. For example, a motion sensor and an optical sensor can be coupled to the interface 201 to respectively enable motion sensing and external light-beam sensing. In addition thereto, other sensors such as a location measurement system, a temperature sensor, a biometric sensor, or the like can be coupled to the interface 250 to perform related functions.

The camera 220 is coupled to the sensor module 250 via the interface 201, and can perform a camera function such as photographing, video clip recording, etc.

The RF processor 240 performs a communication function. For example, an RF signal is converted to a baseband signal under the control of the communication processor 203, and is provided to the communication processor 203, or a baseband signal from the communication processor 203 is transmitted by being converted into an RF signal. Herein, the communication processor 203 processes the baseband signal by using various communication schemes. For example, although not limited thereto, the communication scheme may include a Global System for Mobile Communication (GSM) communication scheme, an Enhanced Data GSM Environment (EDGE) communication scheme, a Code Division Multiple Access (CDMA) communication scheme, a Wideband-Code Division Multiple Access (W-CDMA) communication scheme, a Long Term Evolution (LTE) communication scheme, an Orthogonal Frequency Division Multiple Access (OFDMA) communication scheme, a Wireless Fidelity (Wi-Fi) communication scheme, a WiMax communication scheme, and/or a Bluetooth communication scheme.

The speaker/microphone 210 may input and output an audio stream such as voice recognition, voice reproduction, digital recording, and telephony functions. That is, the speaker/microphone 110 converts an audio signal into an electronic signal or converts the electronic signal into the audio signal. Although not shown, an attachable and detachable ear phone, headphone, or headset can be connected to the electronic device via an external port.

The touch screen controller 265 can be coupled to the touch screen 260. Although not limited thereto, the touch screen 260 and the touch screen controller 265 can use not only capacitance, resistance, infrared and surface sound wave techniques for determining one or more contact points but also any multi-touch sense technique including other proximity sensor arrays or other elements to detect a contact, a movement, or stopping thereof.

The touch screen 260 provides an input/output interface between the electronic device and the user. That is, the touch screen 260 delivers a touch input of the user to the electronic device. In addition, the touch screen 260 is a medium which shows an output from the electronic device to the user. That is, the touch screen shows a visual output to the user. Such a visual output is represented in the form of a text, a graphic, a video, and a combination thereof.

In exemplary embodiments of the present invention, a screen can be used when the electronic device outputs semantic location information by using a corresponding application. Such a screen may be a touch screen for processing a touch input.

A variety of displays can be used as the touch screen 260. For example, although not limited thereto, the touch screen 260 may include a Liquid Crystal Display (LCD), a Light Emitting Diode (LED), a Light Emitting Polymer Display (LPD), an Organic Light Emitting Diode (OLED), an Active Matrix Organic Light Emitting Diode (AMOLED), or a Flexible LED (FLED).

The GPS receiver 230 converts a signal received from a satellite into information of a location, a speed, a time, etc. For example, a distance between the satellite and the GPS receiver is calculated by multiplying a speed of light by a signal arrival time, and a location of the electronic device is measured according to a principle of a well-known triangulation by obtaining a distance and a correct location of three satellites.

The external memory 270 or the internal memory 204 may include a fast random access memory such as one or more magnetic disc storage devices and/or a non-volatile memory, one or more optical storage devices, and/or a flash memory (e.g., NAND, NOR).

The external memory 270 or the internal memory 204 stores a software component. The software component includes an operating system software module, a communication software module, a graphic software module, a user interface software module, a Moving Picture Experts Group (MPEG) module, a camera software module, one or more application software modules, etc. In addition, since a module, i.e., a software component, can be expressed as a group of instructions, the module can also be expressed as an instruction set. The module is also expressed as a program.

The operating system software includes various software components for controlling a general system operation. The control of the general system operation includes memory management and control, storage hardware (device) control and management, power control and management, etc. In addition, the operating system software performs a function for facilitating communication between various hardware elements (devices) and software elements (modules).

The communication software module can enable communication with other electronic devices such as a computer, a server, and/or a portable terminal via the RF processor 240. Further, the communication software module consists of a protocol structure conforming to a corresponding communication scheme.

The graphic software module includes various software components for providing and displaying graphics on the touch screen unit 260. The terminology of "graphics" indicates a text, a web page, an icon, a digital image, a video, an animation, etc.

The user interface software module includes various software components related to the user interface. The user interface software module includes the content related to how a state of the user interface changes and in which condition the state of the user interface changes.

The camera software module includes a camera-related software component which enables camera-related processes and functions. The application module includes a browser, an e-mail, an instant message, word processing, keyboard emulation, an address book, a touch list, a widget, a Digital Right Management (DRM), voice recognition, voice reproduction, a location determining function, a location-based service, etc. The memories 270 and 204 may further include additional modules (instructions) in addition to the aforementioned modules. Alternatively, some of the modules (instructions) may not be used.

In exemplary embodiments of the present invention, the application module includes instructions for generating a semantic location (see

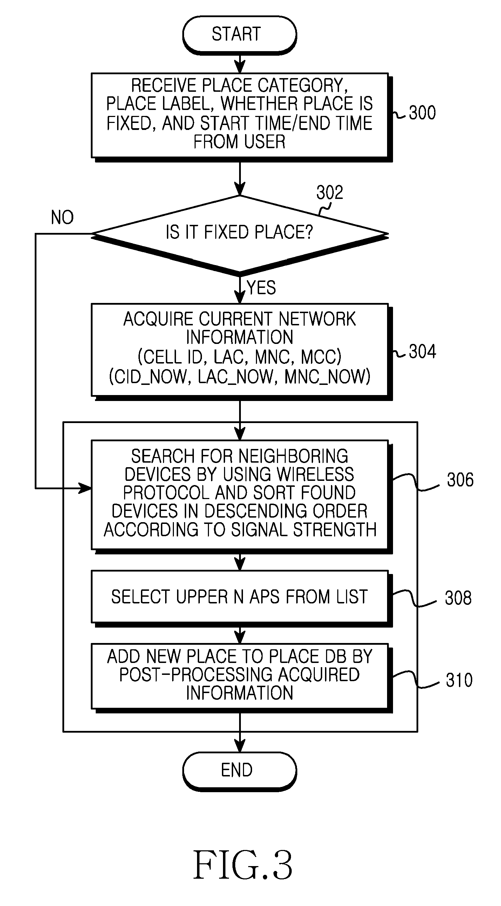

FIG. 3) and instructions for updating a semantic location (see FIG. 4). In addition thereto, the external memory 270 or the internal memory 204 stores the place DB as shown in Table 2 above.

An instruction according to an exemplary embodiment for adding semantic location information of the present invention receives from a user a place category, a place label, whether an input place is fixed or movable, and a start time/end time which is a time range to which the input place will be applied. Further, the instruction determines whether the input place is fixed, and obtains current cellular network information (i.e., Cell ID, LAC, MCC, and MNC) (see Table 1 above). A neighboring AP or device is scanned by operating a near field wireless communication module (e.g., WLAN, NFC, Bluetooth, infrared communication, etc.), and is sorted in a descending order according to an RSSI (see FIG. 5C). In addition, upper n elements are selected from the sorted list and thereafter a new place is added to a place DB by performing post-processing in step 310.

The instruction according to an exemplary embodiment for adding semantic location information of the present invention resets a search target to a null set if there is a place to be applied at a current time, acquires network information at the current time, searches whether a movable place (i.e., a place of which network information is "null") exists in the place DB, adds a case of CGI="null" to the search target if the movable place exists in the place DB, determines whether there is a place of which network information in the place data is current network information (cgi_now) if the movable place does not exist in the place DB, adds a case of CGI=cgi_now to the search target if the place of which network information is cgi_now exists in the place DB, scans neighboring APs or neighboring devices by operating a near field wireless communication module (e.g., WLAN, NFC, Bluetooth, etc.), excludes a place which does not include even one of neighboring APs or devices or which is not applied at the current time from a search target place since distance measurement is not necessary for such a place, measures a signal strength distance between neighboring APs and remaining target places, and recognizes a place as a semantic location (see FIG. 7A) if a measured relative distance is less than min_threshold. Further, the instruction delivers a determined semantic location to an application and a module in a system, reports the determined semantic location through a user interface, requests the user to determine a semantic location (see FIG. 7B) and regulates a threshold if the measured distance is between min_threshold and max_threshold.

In addition, various functions of the electronic device described above and to be described below can be performed by using one or more stream processors and/or a hardware component including an ASIC and/or a software component and/or a combination thereof.

FIG. 3 illustrates a flowchart for adding semantic place information according to an exemplary embodiment of the present invention.

Referring to FIG. 3, in step 300, an electronic device receives from a user a place category, a place label, whether an input place is fixed or movable, and a start time/end time which is a time range to which the input place will be applied. The place category may be selected from a pre-defined list. If there is no corresponding place category, "None" may be selected (see FIG. 5B). According to exemplary implementations, the time range to which the input place will be applied may be additionally defined as a day of the week or a date.

If it is determined that the input place is fixed in step 302, the procedure of FIG. 3 proceeds to step 304. Otherwise, if the input place is not fixed, that is, if the input place is movable, the procedure of FIG. 3 proceeds to step 306.

In step 304, the electronic device acquires current cellular network information (i.e., Cell ID, LAC, MCC, and MNC) (see Table 1 above). The cellular network information is information that can be acquired from a base station in the process of terminal location registration and in the process of network entry/re-entry.

In step 306, the electronic device scans a neighboring AP or device by operating a near field wireless communication module (e.g., WLAN, NFC, Bluetooth, infrared communication, etc.), and thereafter performs sorting in a descending order according to a criterion of an RSSI (see FIG. 5C). Although the sorting is achieved on the basis of signal strength, the present invention is not limited thereto, and thus the sorting can be achieved based on other criteria.

According to an exemplary implementation, an AP preferred by the user may be selected and a high priority may be assigned to the AP. According to another exemplary implementation, if signal strength is less than a specific cutoff threshold, sorting can be performed by excluding a corresponding AP from the list.

In step 308, the electronic device selects upper n elements from the sorted list. In step 310, the electronic device adds a new place to a place DB by performing post-processing. In this case, signal strength in units of mW or dBm is stored by being mapped to a value in the range of 0 to RSSI_Max. The RSSI Max may differ for each vendor or each application. Typically, the RSSI_Max is 100, 127, 255, etc. The mapped RSSI value is stored by performing post-processing. In the post-processing, if an RSSI value is too low or too high, it is changed to a proper value. Alternatively, a high RSSI value may be randomly set for the AP preferred by the user. For example, an RSSI value less than RSSI_Max*25% is replaced with RSSI_Max, or an RSSI value greater than RSSI_Max*90% is replaced with RSSI_Max.

FIG. 4A and FIG. 4B illustrate a flowchart for recognizing a semantic place in an electronic device according to an exemplary embodiment of the present invention.

Referring to FIG. 4A, if it is determined that there is a place to be applied at a current time in step 400, proceeding to step 402, the electronic device resets a search target to a null set. This is to allow the search target to include all semantic place candidates initially existing in a place DB. The search target is a set of places which are candidates of a semantic location at the current time in the place DB.

In step 404, the electronic device acquires network information at the current time. The network information is acquired in the process of location registration or in the process of network entry/network re-entry, and includes a cell ID, an LAC, an MNC, and an MCC. The currently acquired network information is called cgi_now, where cgi_now=(cid_now, lac_now, mnc_now, mcc_now).

According to exemplary implementations, a terminal may request a network to provide the network information to acquire the network information when required.

In step 406, the electronic device searches whether a movable place (i.e., a place of which network information is "null") exists in the place DB.

If the movable place exists in the place DB, proceeding to step 408, a case of CGI="null" is added to the search target. Since the terminal can acquire a plural pieces of network information rather than fixed network information due to movement, a place corresponding to the case of CGI="null" is added to the search target.

Otherwise, if the movable place does not exist in the place DB, proceeding to step 410, it is determined whether there is a place of which network information in the place data is current network information (cgi_now).

If the place of which network information is cgi_now does not exist in the place DB in step 410, searching is not necessary, and thus the procedure of FIG. 4A ends.

Otherwise, if the place of which network information is cgi_now exists in the place DB in step 410, proceeding to step 412, a case of CGI=cgi_now is added to the search target. This is very effective for minimization of power consumption using the network information. For example, several places registered in the Republic of Korea are excluded from comparison targets when the user is on a business trip to the United States. Therefore, the semantic location can be determined by periodically determining only the network information.

Referring to FIG. 4B, the electronic device scans neighboring APs or neighboring devices by operating a near field wireless communication module (e.g., WLAN, NFC, Bluetooth, etc.) in step 414. The scan process is performed according to a corresponding communication scheme. For example, the WLAN communication module performs the scan process on the basis of the IEEE 802.11 protocol, and the Bluetooth communication module performs a paring process between devices on the basis of a Bluetooth communication protocol.

In step 416, the electronic device excludes a place which does not include even one of neighboring APs or devices or which is not applied at the current time from a search target place, since distance measurement is not necessary for such a place.

In step 418, the electronic device measures a signal strength distance between neighboring APs and remaining target places. That is, a relative distance is determined using AP signal strength in the place DB and AP signal strength currently measured.

For example, a vector distance in an n-dimensional space or a Euclidean distance is used in the relative distance calculation using the signal strength. That is, a difference between signal strength of stored APs and APs found at the current location is used with respect to a place_i as shown in Equation (1) below. The signal strength is a value in the range of 0 to RSSI_Max. If the stored AP is not found at the current location, the signal strength is set to RSSI = 0.

$$dist\left(palce_{i}, current\_place\right) = \frac{\sqrt{\sum_{j=1}^{k}\left|rssi_{i,j} - rssi_{j}\right|^{2}}}{k}$$

......(1)

Herein, k denotes the number of APs registered to an actual DB (i.e., the number of fingerprinted APs), and is less than or equal to n which is a maximum number of APs that can be stored. $rssi_{i,j}$ denotes a signal strength value (i.e., a fingerprinted RSSI) of a $j^{th}$ AP of a stored place_i, and $rssi_j$ denotes signal strength (i.e., scanned RSSI) at a current location of a corresponding AP. It is replaced with 0 if the AP is not found. Similarly to $rssi_{i,j}$ which is a post-processed RSSI value, a matching condition can be diversified by using proper post-processing (e.g., if a specific condition is satisfied, regulation of the RSSI value, for example, rssi_j = max(rssi_j, 25%*RSSI_Max)) with respect to the rssi_j. A more generalized distance measurement scheme considering such an aspect is as shown in Equation (2) below.

$$dist\left(palce_{i}, current\_place\right) = \frac{\sqrt{\sum_{j=1}^{k}\delta\left(rssi_{i,j}, rssi_{j}\right)}}{k}$$

......(2)

Herein, a function δ() performs both post-processing on an rssi_j value which is a currently recognized RSSI value and measurement on a distance between two RSSI values, and a maximum value of the function δ() is RSSI_Max^2 (i.e., δ(rssi_i,j, rssi_j) <= RSSI_Max^2). The function δ() performs a function for properly correcting a difference between two RSSI values or for cutting off any area. The function δ() can be implemented with a low pass filter or a higher pass filter, and can also be implemented by combining them.

In Equation (1) or Equation (2) above, a maximum value Dist_Max of dist(place_i, current_place) can be determined by Equation (3) below.

$$Dist\_Max = \frac{\sqrt{\sum_{i=1}^{n} RSSI\_Max^2}}{n} = \frac{1}{\sqrt{n}} \bullet RSSI\_Max$$

$$......(3)$$

Herein, dist(place_i, current_place) is in the range of [0, Dist_Max], and is compared with min_threshold/max_threshold so as to be used to recognize a current semantic location.

In step 420, if a measured relative distance is less than min_threshold, the electronic device recognizes a place as a semantic location (see FIG. 7A). A determined semantic location is delivered to an application and a module in a system, and is reported through a user interface.

In step 422, if the measured distance is between min_threshold and max_threshold, the electronic device requests the user to determine a semantic location (see FIG. 7B), and regulates a threshold. Semantic location information acknowledged by the user is delivered to the application and the module in the system.

The min_threshold/max_threshold can be determined by a user input such as the minimum number of APs required to recognize the semantic location and approximate signal strength or the like of APs, and in one of the simplest methods thereof, the user determines it on the basis of the number of APs. If minVisibleRatio is defined as a ratio of the number k of APs for a corresponding semantic location in the place DB and the minimum number of APs required for place recognition, and similarly, if maxVisibleRatio is defined as a ratio of the maximum number of APs required for place recognition irrespective of signal strength of APs, then one method of determining an initial value of min_threshold/max_threshold is as shown in Equation (4) to Equation (5) below.

$$\max\_threshold = \frac{\sqrt{k(1 - \min VisibleRatio) * RSSI\_Max^2}}{k} \qquad ......(4)$$

$$\max\_threshold = \frac{\sqrt{k(1 - \max VisibleRatio) * RSSI\_Max^2}}{k} \qquad ......(5)$$

The determined min_threshold/max_threshold can be regulated by user feedback. A new distance calculation method considers such conditions and is expressed by Equation (6) below.

$$dist(place_i, curret\_place)$$

$$= \begin{cases} 0, & if \# of \quad the \quad current \quad visible \quad AP > k * \max VisibleRatio \\ Dist\_Max, & if \# of \quad the \quad current \quad visible \quad AP < k * \min VisibleRatio \\ \dfrac{\sqrt{\sum_{j=1}^{k} \delta(rssi_{i,j}, rssi_j)}}{k} & , otherwise \end{cases}$$

$$(6)$$

That is, among APs regarding a corresponding semantic location, if there is an AP having a semantic location greater than or equal to k*max VisibleRatio, a current place is recognized by treating $dist(placet_i, current\_place)$ to zero, and if there is an AP having a semantic location less than k*minVisibleRatio, $dist(place_i, current\_place)$ is regulated to Dist_Max and a place is recognized irrespective of signal strength. In other cases, it is determined by measuring a distance and then by comparing with min_threshold/max_threshold.

In step 424, if the current location is recognized as a semantic place by the system (i.e., if dist() is less than min_threshold), proceeding to step 426, the electronic device updates place information to maintain it to the latest state.

For example, it is assumed that each piece of AP information has timestamp information indicating a time at which corresponding information is stored in the DB, and AP information of each place is sorted by considering an order of the latest time, an order of RSSI sizes, etc.

First, with respect to an intersection part (n_common in number) between AP information (i.e., old AP information) stored in the DB and currently scanned AP information (i.e., new AP information), a timestamp is updated to a current time (i.e., t_now), and an RSSI value is updated to an average value between an old RSSI value and a current RSSI value. According to exemplary implementations, it can be set to the current RSSI value.

An AP not currently found is deleted from the contents of the old AP information if its time is prior to the current time (i.e., t_now) by a threshold (i.e., eps_time). Further, an AP of which a threshold is less than a cutoff threshold (i.e., cutoff_threshold) is deleted from the new AP information - old AP information (i.e., newly added AP). Furthermore, only n - n_common APs are randomly selected from APs of a difference set {new AP DB - old AP DB} U a different set {old AP DB - new AP DB}, and an intersection part between the old AP DB and the new AP DB and a part of {new AP DB - old AP DB} U {old AP DB - new AP DB} is stored in the DB according to a timestamp.

FIG. 5A to FIG. 5D illustrate a user interface for inputting a semantic place according to an exemplary embodiment of the present invention.

Referring to FIG. 5A, together with a semantic place list which is previously input, a button such as new semantic place addition (i.e., Add New place)/semantic place search (i.e., Search)/semantic place view in a map (i.e., Map view) is displayed in the user interface.

FIG. 5B is a user interface displayed when an "Add New place" button of FIG. 5A is executed. A window is displayed so that information regarding place information can be input.

For example, in FIG. 5B, a user can input a place label, information indicating whether a semantic place is fixed, a place category, a time during which the user is active in the semantic place, etc., and an execution button is displayed to scan devices found in the semantic place. Herein, the place label is directly input by the user, information indicating whether the semantic place is fixed can be checked for by the user by using a check box, and the time during which the user is active in the semantic place is determined by the user to a value between a start time and an end time. Meanwhile, when the user selects the place category, a current screen is moved to a screen of FIG. 5C, and when the user presses an execution button for scanning devices found in the semantic place (i.e., Choose wireless device), the current screen is moved to a screen of FIG. 5D.

FIG. 5C is a user interface displayed when "Place category please select" of FIG. 5B is selected. One of the pre-defined place categories can be selected. Although not shown, the user can add/delete/change the place category.

FIG. 5D is a screen displayed when "Choose wireless devices" of FIG. 5B is executed. Neighboring devices found via a WiFi communication module and a Bluetooth communication module can be displayed one by one or all at once.

FIG. 6A and FIG. 6B illustrate an example of indicating a semantic place in a map according to an exemplary embodiment of the present invention.

In FIG. 6A in which a button such as new semantic place addition (i.e., Add New place)/semantic place search (i.e., Search)/semantic place view in a map (i.e., Map view) is displayed in the user interface together with a semantic place list which is previously input, if a user selects "Map view", previously registered semantic places are displayed by being indicated in the map as shown in FIG. 6B.

FIG. 7A and FIG. 7B illustrate a user interface for semantic location recognition according to an exemplary embodiment of the present invention.

In FIG. 7A, when a semantic place is recognized at a corresponding location according to FIG. 4, the semantic place recognized by a user is notified to the user by using a popup window. For example, if a current location is recognized as a registered "Startbucks", the user is notified that the current location is "Starbucks".

In FIG. 7B, when it is not correctly determined whether a semantic place recognized according to FIG. 4 is a registered semantic place or not, whether it is the recognized semantic place is inquired to the user. For example, when it cannot be determined whether a current location is "work" or not, a popup window appears to inquire the user about whether the current location is "work".

FIG. 8 illustrates the concept of determining a semantic place according to an exemplary embodiment of the present invention. It is assumed that information on the semantic place is configured in a DB as shown in Table 1 above.

Referring to FIG. 8, four places (e.g., a "home" 800, an "office" 830, a "Starbucks" 810, and a "Coffeebeans" 820) are registered on the basis of Table 1 above. The number of APs used in registration is n=5.

A terminal 840 scans neighboring APs to measure signal strength. Since the Place1 800 and the Place3 810 are currently out of a wireless coverage of the terminal, they are excluded from comparison targets. A distance to found APs is measured with respect to the Place2 820 and the Place4 830, and thereafter is compared with min_threshold. If the distance is less than min_threshold, it is recognized as a current semantic location. If the distance is between min_threshold and max_threshold, a user is allowed to determine whether the semantic location is recognized.

As described above, in exemplary embodiments of the present invention, location information actually meaningful to the user is acquired and managed instead of coordinate-based location information. Therefore, various personalized service scenarios can be provided to the user. More particularly, it is very appropriate to an indoor environment such as a high-rise building or an underground space.

In addition, when contents information is provided, a semantic location consisting of a place category and a place label is used instead of a coordinate location. Therefore, semantic location information is delivered to an application, and thus it can be recognized whether the user is at "home", "work", or other places. Accordingly, various personalized services can be provided.

For example, music for a home and music for a car ride can be automatically played back by distinguishing the two, or a calendar service or the like which automatically shows a today's work list can be performed when the user arrives an office. In addition, the place category can be sub-categorized or extended to be determined by an application, thereby being able to provide a context-aware service. For example, contents "watching a movie" can be extracted in a "Movie" place or contents "having a cup of coffee" or "meeting a friend" can be extracted respectively in a "Cafe" place.

In an indoor environment and a mobile environment, an altitude location may be incorrect or may be difficult to be obtained when using the conventional location recognition technique. Therefore, in case of a location service in a high-rise building or an underground space, the conventional coordinate-based technique generates a location recognition error in which floors are not clearly distinguished from one another. In case of the present invention, the floors can be clearly distinguished on the basis of a signal of a wireless device, and thus exemplary embodiments of the present invention are appropriate for in-door location recognition and more excels in recognition accuracy.

In addition, exemplary embodiments of the present invention can more adaptively cope with a case in which an interest target moves. For example, if a favorite cafe moves to another area, the conventional technique reports a previous location and thus fails in location recognition. However, according to exemplary embodiments of the present invention, in a condition that signal strength of a wireless device is similar, the same place is recognized, and thus a new cafe location can be correctly recognized. In addition thereto, when an AP is installed in a public transportation means such as a bus, the same place (e.g., in a format of transportation/"commuter bus No. 3001") can be recognized while on the move.

While the invention has been shown and described with reference to certain exemplary embodiments thereof, it will be understood by those skilled in the art that various changes in form and details may be made therein without departing from the scope of the present invention as defined by the appended claims and their equivalents.

**Claims**

1.  A location recognition method, the method comprising:

    determining location (410) search targets in a DataBase DB including location information on the basis of first network information;
    selecting (414) at least one place from the determined location search targets on the basis of second network information;
    measuring (418) a relative distance by using first signal strength and second signal strength with respect to the selected at least one place; and
    recognizing (420) the selected at least one place as a current location on the basis of the relative distance,
    wherein the first signal strength is signal strength of a device corresponding to the selected place pre-stored in the DB, and
    wherein the second signal strength is signal strength of a device currently found and corresponding to the selected place,wherein in the determining of the location search targets in the DB including the location information on the basis of the first network information, a place of which the first network information in the DB including the location information is "null" is included in the location search targets, a place corresponding to third network information acquired through a network is included in the location search targets, the place of which the first network information is "null" is a place of which a location is not fixed, and the first network information or the third network information includes at least one of a cell IDentifier ID, a Location Area Code LAC, a Mobile Network Code MNC, and a Mobile Country Code MCC.

**2.** The method of claim 1, wherein in the measuring of the relative distance by using the first signal strength and the second signal strength with respect to the selected at least one place, the relative distance is measured by using a difference between signal strength of first devices found at the current location and signal strength of second devices pre-stored in the DB, and signal strength of devices belonging to the found first device and not coinciding with the pre-stored second devices is "0".

**3.** The method of claim 1, wherein the recognizing of the selected at least one place as the current location on the basis of the relative distance comprises:

    reporting that at least one of the selected place is the current location if the relative distance is less than a first threshold; and
    inquiring whether the selected at least one place is configured to the current location when the relative distance is between the first threshold and a second threshold.

**4.** The method of claim 1, wherein the measuring of the relative distance by using the first signal strength and the second signal strength with respect to the selected at least one place comprises:

    if the number of devices found from the second devices pre-stored in the DB is greater than or equal to a ratio of the maximum number of devices required for place recognition, setting the relative distance to "0";
    if the number of devices found from the second devices pre-stored in the DB is greater than or equal to a ratio of the minimum number of devices required for place recognition, setting the relative distance to a pre-set maximum distance; and
    otherwise, measuring the relative distance by using a difference between signal strength of the first devices found at the current location and signal strength of the second devices pre-stored in the DB.

**5.** The method of claim 1, further comprising, when the selected at least one place is recognized as the current location, updating network information on the place pre-stored in the DB, by using the second network information, wherein the updating of the network information on the place pre-stored in the DB by using the second network information comprises:

    with respect to the selected at least one place, determining signal strength of the found first devices and devices coinciding with the pre-stored second devices to an average value of signal strength of the first device and signal strength of the second device;
    deleting unfound devices belonging to the second devices by using a timestamp of currently not found devices;
    deleting devices not included in the second devices if signal strength of a fourth device belonging to the found first devices and not included in the second devices is less than a threshold;
    selecting a specific number of fifth devices from third devices belonging to the first devices and not included in the second and fourth devices belonging to the second devices and not included in the first devices; and
    storing the first devices, devices coinciding with the second devices, and the fifth devices by sorting the devices in a timestamp order.

**6.** The method of claim 1, further comprising generating location information in the DB, wherein the generating of the location information in the DB comprises:

    determining at least one of a place category, a place label, whether an input place is fixed or movable, and a time range to which the input place will be applied;
    acquiring the first network information if the input place is fixed;
    setting the first network information to "null" if the input place is not fixed;
    acquiring the second network information; and
    generating one piece of location information by combining the place category, the place label, whether the input place is fixed or movable, the time range to which the input place will be applied, the first network information, and the second network information.

**7.** An electronic device, comprising:

    one or more processors;
    memory; and
    one or more programs, wherein the one or more programs are stored in the memory and configured to cause, when executed by the electronic device, the electronic device to perform the method of any of claims 1 to 6.

**Patentansprüche**

1. Ortserkennungsverfahren, wobei das Verfahren Folgendes umfasst:

   Ermitteln (410) von Ortssuchzielen in einer DatenBank DB, die Ortsinformationen beinhaltet, auf Basis erster Netzinformationen;
   Auswählen (414) mindestens einer Stelle aus den ermittelten Ortssuchzielen auf Basis zweiter Netzinformationen;
   Messen (418) einer relativen Entfernung durch Verwenden erster Signalstärke und zweiter Signalstärke in Bezug auf die ausgewählte mindestens eine Stelle und
   Erkennen (420) der ausgewählten mindestens einen Stelle als einen aktuellen Ort auf Basis der relativen Entfernung,
   wobei die erste Signalstärke Signalstärke eines Gerätes ist, das der ausgewählten Stelle entspricht, die in der DB vorgespeichert ist, und
   wobei die zweite Signalstärke Signalstärke eines Gerätes ist, das aktuell gefunden worden ist und der ausgewählten Stelle entspricht, wobei beim Ermitteln der Ortssuchzielen in der Datenbank DB, die die Ortsinformationen beinhaltet, auf Basis der ersten Netzinformationen eine Stelle, deren erste Netzinformationen in der DB, die die Ortsinformationen beinhaltet, "null" sind, in den Ortssuchzielen beinhaltet ist, eine Stelle, die dritten Netzinformationen entspricht, die über ein Netz erfasst worden sind, in den Ortssuchzielen beinhaltet ist, die Stelle, deren erste Netzinformationen "null" sind, eine Stelle ist, wovon kein Ort fest ist, und die ersten Netzinformationen oder die dritten Netzinformationen mindestens eines von einem ZellenIDentifikator ID, einem Ortsbereichscode LAC, einem Mobilfunknetzcode MNC und einem Mobilfunkländercode MCC beinhalten.

2. Verfahren nach Anspruch 1, wobei beim Messen der relativen Entfernung durch Verwenden der ersten Signalstärke und der zweiten Signalstärke in Bezug auf die ausgewählte mindestens eine Stelle die relative Entfernung durch Verwenden einer Differenz zwischen Signalstärke erster Geräte, die am aktuellen Ort gefunden worden sind, und Signalstärke zweiter Geräte gemessen wird, die in der DB vorgespeichert sind, und Signalstärke von Geräten, die zum gefundenen ersten Gerät gehören und sich nicht mit den vorgespeicherten zweiten Geräten decken, "0" ist.

3. Verfahren nach Anspruch 1, wobei das Erkennen der ausgewählten mindestens einen Stelle als den aktuellen Ort auf Basis der relativen Entfernung Folgendes umfasst:

   Melden, dass mindestens eine der ausgewählten Stellen der aktuelle Ort ist, wenn die relative Entfernung kleiner als eine erste Schwelle ist; und
   Untersuchen, ob die ausgewählte mindestens eine Stelle zum aktuellen Ort konfiguriert ist, wenn die relative Entfernung zwischen der ersten Schwelle und einer zweiten Schwelle liegt.

4. Verfahren nach Anspruch 1, wobei das Messen der relativen Entfernung durch Verwenden der ersten Signalstärke und der zweiten Signalstärke in Bezug auf die ausgewählte mindestens eine Stelle Folgendes umfasst:

   wenn die Anzahl von Geräten, die aus den zweiten Geräten gefunden worden sind, die in der DB vorgespeichert sind, größer oder gleich einem Verhältnis der Maximalanzahl an Geräten ist, die zur Stellenerkennung erforderlich sind, Setzen der relativen Entfernung auf "0";
   wenn die Anzahl von Geräten, die aus den zweiten Geräten gefunden worden sind, die in der DB vorgespeichert sind, größer oder gleich einem Verhältnis der Minimalanzahl an Geräten ist, die zur Stellenerkennung erforderlich sind, Setzen der relativen Entfernung auf eine voreingestellte Maximalentfernung und
   andernfalls Messen der relativen Entfernung durch Verwenden einer Differenz zwischen Signalstärke der ersten Geräte, die am aktuellen Ort gefunden worden sind, und Signalstärke der zweiten Geräte, die in der DB vorgespeichert sind.

5. Verfahren nach Anspruch 1, das ferner Folgendes umfasst: wenn die ausgewählte mindestens eine Stelle als aktueller Ort erkannt worden ist, Aktualisieren von Netzinformationen zur Stelle, die in der DB vorgespeichert sind, durch Verwenden der zweiten Netzinformationen,
   wobei das Aktualisieren der Netzinformationen zur Stelle, die in der DB vorgespeichert sind, durch Verwenden der zweiten Netzinformationen Folgendes umfasst:

in Bezug auf die ausgewählte mindestens eine Stelle Bestimmen von Signalstärke der gefundenen ersten Geräte und Geräte, die sich mit den vorgespeicherten zweiten Geräten decken, auf einen Durchschnittswert an Signalstärke des ersten Gerätes und Signalstärke des zweiten Gerätes;

Löschen nicht gefundener Geräte, die zu den zweiten Geräten gehören, durch Verwenden einer Zeitmarke aktuell nicht gefundener Geräte;

Löschen von Geräten, die nicht in den zweiten Geräten beinhaltet sind, wenn Signalstärke eines vierten Gerätes, das zu den gefundenen ersten Geräten gehört und nicht in den zweiten Geräten beinhaltet ist, kleiner als eine Schwelle ist;

Auswählen einer bestimmten Anzahl fünfter Geräte aus dritten Geräten, die zu den ersten Geräten gehören und nicht in den zweiten und vierten Geräten beinhaltet sind, die zu den zweiten Geräten gehören und nicht in den ersten Geräten beinhaltet sind; und

Speichern der ersten Geräte, von Geräten, die sich mit den zweiten Geräten decken, und der fünften Geräte durch Sortieren der Geräte in einer Zeitmarkenreihenfolge.

6. Verfahren nach Anspruch 1, das ferner Generieren von Ortsinformationen in der DB umfasst, wobei das Generieren der Ortsinformationen in der DB Folgendes umfasst:

Bestimmen mindestens eines einer Stellenkategorie, einer Stellenbezeichnung, ob eine eingegebene Stelle fest oder beweglich ist, und eines Zeitbereiches, auf den die eingegebene Stelle angewandt wird;

Erfassen der ersten Netzinformationen, wenn die eingegebene Stelle fest ist;

Setzen der ersten Netzinformationen auf "null", wenn die eingegebene Stelle nicht fest ist;

Erfassen der zweiten Netzinformationen und

Generieren eines Stückes Ortsinformationen durch Kombinieren der Stellenkategorie, der Stellenbezeichnung, ob die eingegebene Stelle fest oder beweglich ist, des Zeitbereiches, auf den die eingegebene Stelle angewandt wird, der ersten Netzinformationen und der zweiten Netzinformationen.

7. Elektronisches Gerät, das Folgendes umfasst:

einen oder mehrere Prozessoren;

Speicher und

ein oder mehrere Programme, wobei das eine oder die mehreren Programme im Speicher gespeichert sind und konfiguriert sind, zu veranlassen, dass, wenn sie durch das elektronische Gerät ausgeführt werden, das elektronische Gerät das Verfahren nach irgendeinem der Ansprüche 1 bis 6 durchführt.

**Revendications**

1. Procédé de reconnaissance d'emplacement, le procédé comprenant :

la détermination de cibles de recherche d'emplacement (410) dans une base de données, DB, comprenant des informations d'emplacement sur la base de premières informations de réseau ;

la sélection (414) d'au moins un lieu parmi les cibles de recherche d'emplacement déterminées sur la base de deuxièmes informations de réseau ;

la mesure (418) d'une distance relative en utilisant une première force de signal et une deuxième force de signal par rapport à l'au moins un lieu sélectionné ; et

la reconnaissance (420) de l'au moins un lieu sélectionné en tant qu'emplacement actuel sur la base de la distance relative,

dans lequel la première force de signal est une force de signal d'un dispositif correspondant au lieu sélectionné pré-stocké dans la DB, et

dans lequel la deuxième force de signal est une force de signal d'un dispositif actuellement trouvé et correspondant au lieu sélectionné, dans lequel, dans la détermination des cibles de recherche d'emplacement dans la DB comprenant les informations d'emplacement sur la base des premières informations de réseau, un lieu auquel les premières informations de réseau dans la DB comprenant les informations d'emplacement sont « nulles » est inclus dans les cibles de recherche d'emplacement, un lieu correspondant à des troisièmes informations de réseau acquises par l'intermédiaire d'un réseau est inclus dans les cibles de recherche d'emplacement, le lieu auquel les premières informations de réseau sont « nulles » est un lieu auquel un emplacement n'est pas fixe, et les premières informations de réseau ou les troisièmes informations de réseau comprennent au moins l'un d'un identifiant, ID, de cellule, d'un code de zone d'emplacement, LAC, d'un code de réseau mobile, MNC, et d'un code de pays mobile, MCC.

2. Procédé selon la revendication 1, dans lequel, dans la mesure de la distance relative en utilisant la première force de signal et la deuxième force de signal par rapport à l'au moins un lieu sélectionné, la distance relative est mesurée en utilisant une différence entre une force de signal de premiers dispositifs trouvés à l'emplacement actuel et une force de signal de deuxièmes dispositifs pré-stockés dans la DB, et la force de signal de dispositifs appartenant aux premiers dispositifs trouvés et ne coïncidant pas avec les deuxièmes dispositifs pré-stockés est « 0 ».

3. Procédé selon la revendication 1, dans lequel la reconnaissance de l'au moins un lieu en tant qu'emplacement actuel sur la base de la distance relative comprend :

le rapport que l'au moins un lieu sélectionné est l'emplacement actuel si la distance relative est inférieure à un premier seuil ; et
l'interrogation si l'au moins un lieu sélectionné est configuré à l'emplacement actuel lorsque la distance relative est entre le premier seuil et un deuxième seuil.

4. Procédé selon la revendication 1, dans lequel la mesure de la distance relative en utilisant la première force de signal et la deuxième force de signal par rapport à l'au moins un lieu sélectionné comprend :

si le nombre de dispositifs trouvés parmi les deuxièmes dispositifs pré-stockés dans la DB est supérieur ou égal à un rapport du nombre maximum de dispositifs nécessaires à la reconnaissance de lieu, le réglage de la distance relative à « 0 » ;
si le nombre de dispositifs trouvés parmi les deuxièmes dispositifs pré-stockés dans la DB est supérieur ou égal à un rapport du nombre minimum de dispositifs nécessaires à la reconnaissance de lieu, le réglage de la distance relative à une distance maximale pré-réglée ; et
sinon, la mesure de la distance relative en utilisant une différence entre une force de signal des premiers dispositifs trouvés à l'emplacement actuel et d'une force de signal des deuxièmes dispositifs pré-stockés dans la DB.

5. Procédé selon la revendication 1, comprenant en outre, lorsque l'au moins un lieu sélectionné est reconnu en tant qu'emplacement actuel, la mise à jour des informations de réseau sur le lieu pré-stocké dans la DB, en utilisant les deuxièmes informations de réseau,
dans lequel la mise à jour des informations de réseau sur le lieu pré-stocké dans la DB en utilisant les deuxièmes informations de réseau comprend :

par rapport à l'au moins un lieu sélectionné, la détermination d'une force de signal des premiers dispositifs trouvés et des dispositifs coïncidant aux deuxièmes dispositifs pré-stockés à une valeur moyenne d'une force de signal du premier dispositif et d'une force de signal du deuxième dispositif ;
la suppression des dispositifs introuvables appartenant aux deuxièmes dispositifs en utilisant un horodatage des dispositifs actuellement introuvables ;
la suppression des dispositifs non inclus dans les deuxièmes dispositifs si une force de signal d'un quatrième dispositif appartenant aux premiers dispositifs trouvés et non inclus dans les deuxièmes dispositifs est inférieure à un seuil ;
la sélection d'un nombre spécifique de cinquièmes dispositifs parmi des troisièmes dispositifs appartenant aux premiers dispositifs et non inclus dans les deuxièmes et quatrièmes dispositifs appartenant aux deuxièmes dispositifs et non inclus dans les premiers dispositifs ; et
le stockage des premiers dispositifs, des dispositifs coïncidant aux deuxièmes dispositifs et des cinquièmes dispositifs en triant les dispositifs dans l'ordre de leur horodatage.

6. Procédé selon la revendication 1, comprenant en outre la génération d'informations d'emplacement dans la DB,
dans lequel la génération des informations d'emplacement dans la DB comprend :

la détermination d'au moins l'un d'une catégorie de lieu, d'un libellé de lieu, d'une indication si un lieu d'entrée est fixe ou mobile, et d'une plage de temps dans laquelle le lieu d'entrée est appliqué ;
l'acquisition des premières informations de réseau si le lieu d'entrée est fixe ;
le réglage des premières informations de réseau à « nulles » si le lieu d'entrée n'est pas fixe ;
l'acquisition des deuxièmes informations de réseau ; et
la génération d'un élément d'informations de lieu en combinant la catégorie de lieu, le libellé de lieu, l'indication si le lieu d'entrée est fixe ou mobile, la plage de temps dans laquelle le lieu d'entrée est appliqué, les premières informations de réseau et les deuxièmes informations de réseau.

7. Dispositif électronique comprenant :

un ou plusieurs processeurs ;
une mémoire ; et
un ou plusieurs programmes, dans lequel l'un ou plusieurs programmes sont stockés dans la mémoire et sont configurés pour amener, lorsqu'ils sont exécutés par le dispositif électronique, le dispositif électronique à effectuer le procédé selon l'une quelconque des revendications 1 à 6.

FIG.1

FIG.2

EP 2 677 337 B1

START

RECEIVE PLACE CATEGORY, PLACE LABEL, WHETHER PLACE IS FIXED, AND START TIME/END TIME FROM USER — 300

IS IT FIXED PLACE? 302

NO

YES

ACQUIRE CURRENT NETWORK INFORMATION (CELL ID, LAC, MNC, MCC) (CID_NOW, LAC_NOW, MNC_NOW) — 304

SEARCH FOR NEIGHBORING DEVICES BY USING WIRELESS PROTOCOL AND SORT FOUND DEVICES IN DESCENDING ORDER ACCORDING TO SIGNAL STRENGTH — 306

SELECT UPPER N APS FROM LIST — 308

ADD NEW PLACE TO PLACE DB BY POST-PROCESSING ACQUIRED INFORMATION — 310

END

FIG.3

START

400

IS THERE
PLACE TO BE APPLIED AT
CURRENT
TIME? — NO

YES

RESET SEARCH TARGET
TO NULL SET — 402

ACQUIRE CURRENT NETWORK
INFORMATION (CELL ID, LAC, MNC,
MCC)CGI_NOW=(CID_NOW,
LAC_NOW, MNC_NOW, MCC_NOW) — 404

406

IS THERE
PLACE OF WHICH NETWORK
INFORMATION (CGI) IS
"NULL"?

YES / NO

408
ADD CASE OF
CGI="NULL" TO SEARCH
TARGET

410
IS THERE
PLACE OF WHICH CGI VALUE
IS CGI_NOW?

YES

NO

412
ADD CASE OF CGI=CGI_NOW TO
SEARCH TARGET

414

END

FIG.4A

21

412

SEARCH NEIGHBORING PLACE BY
USING WIRELESS PROTOCOL

414

EXCLUDE PLACE NOT INCLUDING
NEIGHBORING DEVICE OR NOT
APPLIED AT CURRENT TIME FROM
SEARCH TARGET PLACE

416

MEASURE SIGNAL STRENGTH
DISTANCE BETWEEN FOUND AP
AND TARGET PLACES

418

RECOGNIZE PLACE OF WHICH
DISTANCE IS LESS THAN
MIN_THRESHOLD AS SEMANTIC
LOCATION

420

REQUEST USER TO SELECT PLACE
OF WHICH DISTANCE IS BETWEEN
MIN_THRESHOLD AND
MAX_THRESHOLD, AND REGULATE
THRESHOLDS

422

426

UPDATE PLACE DB

YES

IS CURRENT
LOCATION RECOGNIZED
AS SEMANTIC
LOCATION?

424

NO

END

FIG.4B

EP 2 677 337 B1

## FIG.5A

**INDICATORS**

**LIST OF YOUR PLACES OF INTEREST**

| THUMB NAIL | "HOME"<br>HOME / ALL DAY |

| THUMB NAIL | "OFFICE"<br>OFFICE / 10:00 am~2:30pm |

| THUMB NAIL | "STARBUCKS"<br>CAFE' / 10:00 pm~5:00 pm |

| THUMB NAIL | "COFFEBEANS"<br>CAFE' / 4:00 pm~11:30 pm |

| THUMB NAIL | "MAY CAR"<br>CAR / ALL DAY |

[ ADD NEW PLACE ] [ SEARCH ] [ MAP VIEW ]

TAP

## FIG.5B

**INDICATORS**

**REGISTER YOUR CURRENT PLACE**

| THUMB NAIL | PLACE LABEL<br>ENTER THE PLACE LABEL |

FIXED PLACE? ☑

PLACE CATEGORY
PLEASE SELECT ◉

ALL DAY ☐

START TIME
10 : 00 : 00 AM

END TIME
02 : 30 : 00 PM

CHOOSE WIRELESS DEVICES   TAP

[ SAVE ] [ CANCEL ]

## FIG.5C

**INDICATORS**

**CHOOSE THE PLACE CLASS BELOW**

HOME

OFFICE

CAFE'   ✓

TRANSPORTATION

CAR

NONE

[ ↶ ]

## FIG.5D

**INDICATORS**

| ALL | WIFI | BLUETOOTH |

WIFI AP1 ☆
WiFi MAC Addr 01:23:45:67:89 ab

WIFI AP1 ★
WiFi MAC Addr 01:23:45:67:01 ab

TEST AP ☆
WIFI MAC ADDR 71:23:25:67:19 af

BLUETOOTH P3 ☆
BLUETOOTH ADDR 04:23:45:67:89 ab

SPH-W5200 ☆
BLUETOOTH  04:77:45:67:99 xc

[ SCAN ] [ SAVE ]

INDICATORS

LIST OF YOUR PLACES OF INTEREST

THUMB NAIL | "HOME"
HOME / ALLDAY

THUMB NAIL | "OFFICE"
OFFICE / 10:00 am~2:30pm

THUMB NAIL | "STARBUCKS"
CAFE' / 10:00 pm~5:00 pm

THUMB NAIL | "COFFEBEANS"
CAFE' / 4:00 pm~11:30 pm

THUMB NAIL | "MAY CAR"
CAR / ALLDAY

ADD NEW PLACE | SEARCH | MAP VIEW

TAP →

INDICATORS

REGISTERED PLACES

"HOME"
"COFFEBEANS"
"STARBUCKS"
"OFFICE"
"MAY CAR"
100
61
385

# FIG.6A

# FIG.6B

INDICATORS

NOTIFICATION

YOU ARE AT "STARBUCKS".

FIG.7A

INDICATORS

NOTIFICATION

ARE YOU AT "WORK"?

OK   CANCEL

FIG.7B

PLACE 1.
HOME/"HOME" (800)

PLACE 3.
CAFE'/"STARBUCKS" (810)

PLACE 4.
CAFE'/"COFFEBEANS" (820)

PLACE 2.
OFFICE/"OFFICE" (830)

(840)

FIG.8

**EP 2 677 337 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20120041972
- US 2009310585 A